(19)

Europäisches
Patentamt

European
Patent Office

Office européen
des brevets

(11) **EP 4 365 786 A1**

(12) **EUROPEAN PATENT APPLICATION**

(43) Date of publication:
**08.05.2024 Bulletin 2024/19**

(51) International Patent Classification (IPC):
**G06N 20/20** $^{(2019.01)}$ **G06N 3/02** $^{(2006.01)}$

(21) Application number: **23175128.0**

(22) Date of filing: **24.05.2023**

(52) Cooperative Patent Classification (CPC):
**G06N 20/20; G06N 3/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.11.2022 KR 20220143771**

(71) Applicant: **Samsung Electronics Co., Ltd.
Suwon-si, Gyeonggi-do 16677 (KR)**

(72) Inventors:
• **LEE, Huijin
Suwon-si 16678 (KR)**
• **BADDAR, Wissam
Suwon-si 16678 (KR)**
• **AHN, Saehyun
Suwon-si 16678 (KR)**
• **HAN, Seungju
Suwon-si 16678 (KR)**

(74) Representative: **Arnold & Siedsma
Bezuidenhoutseweg 57
2594 AC The Hague (NL)**

(54) **METHOD AND DEVICE WITH ENSEMBLE MODEL FOR DATA LABELING**

(57)    A method and device for labeling are provided. A labeling method includes: determining inference performance features of respective neural network models included in an ensemble model, wherein the inference performance features correspond to performance of the neural network models with respect to inferring classes of the ensemble model; based on the inference performance features, determining weights for each of the classes for each of the neural network models, wherein the weights are not weights of nodes of the neural network models; generating classification result data by performing a classification inference operation on labeling target inputs by the neural network models; determining score data representing confidences for each of the classes for the labeling target inputs by applying weights of the weight data to the classification result data; and measuring classification accuracy of the classification operation for the labeling target inputs based on the score data.

FIG. 4

**Description**

BACKGROUND

1. Field

The following description relates to a method and device with an ensemble model for data labeling.

2. Description of Related Art

Technical automation of a recognition process has been implemented using, for example, a neural network model implemented by a processor, which functions as a special calculation structure. Such automation may provide a computationally intuitive mapping between an input pattern and an output pattern after training, which may be considerable. The trainability of a neural network model to generate such a mapping may be referred to as a learning ability of the neural network. Such a specialized and specially trained neural network, due to specialized training, may have a generalization ability that allows the neural network to generate a relatively accurate output for an input pattern on which the neural network has not been trained.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a labeling method includes: determining inference performance features of respective neural network models included in an ensemble model, wherein the inference performance features correspond to performance of the neural network models with respect to inferring classes of the ensemble model; based on the inference performance features, determining weight data indicating weights for each of the classes for each of the neural network models, wherein the weights are not weights of nodes of the neural network models but rather wherein the weight data is representative for contributions of the respective neural network models to overall inference of the ensemble model; generating classification result data by performing a classification inference operation on labeling target inputs by the neural network models; determining score data representing confidences for each of the classes for the labeling target inputs by applying weights of the weight data to the classification result data; and measuring classification accuracy of the classification operation for the labeling target inputs based on the score data.

The method may further include: generating validation result data by performing a classification operation on validation inputs by the neural network models; generating first partial data of the validation result data by performing a first classification operation on the validation inputs by the neural network models; generating additional validation inputs by transforming the validation inputs; and generating second partial data of the validation result data by performing a second classification operation on the additional validation inputs by the neural network models.

The determining of the weight data may include: determining model confidence data indicating model confidence of the neural network models and consistency data indicating classification consistency for each class of the neural network models, based on a comparison result between labels of the validation inputs and the validation result data; and determining the weight data by integrating the model confidence data and the consistency data.

The measuring of the classification accuracy may include: determining representative score values based on the labeling target inputs based on the score data; and classifying each of the labeling target inputs into a first group or a second group based on the representative score values.

The score data may include individual score data of each of the labeling target inputs, and the determining of the representative score values includes determining a maximum value of each piece of individual score data of the labeling target inputs of the score data to be the representative score value of each of the labeling target inputs.

The weight data may correspond to an m*n weight matrix, where m may be the number of the neural network models, and where n may be the number of classes.

The generating of the classification result data may include generating a first classification result matrix based on a first labeling target input of the labeling target inputs, and the determining of the score data may include determining an m*n first individual score matrix by applying the weight matrix to the first classification result matrix.

The measuring of the classification accuracy may include: determining a first representative score value for the first labeling target input from the first individual score matrix; and classifying the first labeling target input into a certain label group or a review group based on the first representative score value.

The determining of the first representative score value may include: determining a 1*n first individual score vector by integrating elements of the first individual score matrix for each class; and determining a maximum value of the elements of the first individual score vector to be the first representative score value.

The validation inputs and the labeling target inputs may correspond to semiconductor images based on a semiconductor manufacturing process. the classes of the neural network models may correspond to types of manufacturing defects based on the semiconductor manufacturing process.

In another general aspect, a labeling device includes: one or more processors; and a memory storing instructions configured to, when executed by the one or more processors, cause the one or more processors to: generate validation result data by performing a classification operation on validation inputs by neural network models, determine weight data indicating weights for each class of the neural network models, based on a comparison result between the validation result data and each label of the validation inputs, wherein the weights are not weights of nodes of the neural network models but rather wherein the weight data is representative for contributions of the respective neural network models to overall inference; generate classification result data by performing a classification operation on labeling target inputs by the neural network models; determine score data representing confidences for each class for the labeling target inputs by applying weights of the weight data to the classification result data, and measure classification accuracy of the classification operation for the labeling target inputs, based on the score data.

The instructions may be further configured to cause the one or more processors to: generate first partial data of the validation result data by performing a first classification operation on the validation inputs by the neural network models, generate additional validation inputs by transforming the validation inputs, and generate second partial data of the validation result data by performing a second classification operation on the additional validation inputs by the neural network models.

To determine the weight data, the instructions may be further configured to cause the one or more processors to: determine model confidence data indicating model confidence of the neural network models and consistency data indicating classification consistency for each class of the neural network models, based on a comparison result between each label of the validation inputs and the validation result data, and determine the weight data by integrating the model confidence data and the consistency data.

To measure the classification accuracy, the instructions may be further configured to cause the one or more processors to: determine representative score values based on the labeling target inputs based on the score data, and classify each of the labeling target inputs into a certain label group or a review group based on the representative score values.

The score data may include individual score data of each of the labeling target inputs, and to determine the representative score values, the instructions may be further configured to cause the one or more processors to determine a maximum value of each piece of individual score data of the labeling target inputs of the score data to be the representative score value of each of the labeling target inputs.

The instructions may be further configured to cause the one or more processors to: generate the classification result data, generate a first classification result matrix based on a first labeling target input of the labeling target inputs, and to determine the score data, determine an $m*n$ first individual score matrix by applying the weight matrix to the first classification result matrix.

To measure the classification accuracy, the instructions may be further configured to cause the one or more processors to: determine a first representative score value for the first labeling target input from the first individual score matrix, and classify the first labeling target input into a certain label group or a review group based on the first representative score value.

The validation inputs and the labeling target inputs may correspond to semiconductor images based on a semiconductor manufacturing process. The classes of the neural network models may correspond to types of manufacturing defects based on the semiconductor manufacturing process.

In another general aspect, a method includes: storing constituent neural networks (NNs) of an ensemble model, the constituent NNs each trained to infer a same set of class labels from input data items inputted thereto; for each constituent NN, providing a respective score set comprising scores of the respective classes, wherein each constituent NN's score set comprises scores that are specific thereto, and wherein each score comprises a measure of inference performance of a corresponding constituent NN with respect to a corresponding class label; inputting an input data item to the constituent NNs and based thereon, the constituent NNs generate respective sets of prediction values, each set of prediction values comprising prediction values of the respective class labels for the corresponding constituent NN; assigning a class label, among the class labels, to the input data item by applying the score sets of the constituent NNs to the respective sets of prediction values of the constituent NNs.

The scores may be generated based on measures of model confidence and/or model consistency of the constituent NNs with respect to the class labels.

Other features and aspects will be apparent from the following detailed description, the drawings, and the claims.

BRIEF DESCRIPTION OF THE DRAWINGS

FIG. 1 illustrates an example labeling operation based on an ensemble model, according to one or more embodiments.
FIG. 2 illustrates an example process of deriving weight data, according to one or more embodiments.
FIG. 3 illustrates an example process of deriving consistency data according to one or more embodiments.
FIG. 4 illustrates an example of a labeling process, according to one or more embodiments.
FIG. 5 illustrates an example of applying a labelling operation to a semiconductor manufacturing process, according to one or more embodiments.
FIG. 6 illustrates an example labeling method, according to one or more embodiments.
FIG. 7 illustrates an example configuration of a labeling apparatus, according to one or more embodiments.
FIG. 8 illustrates an example configuration of an electronic device, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As nonlimiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

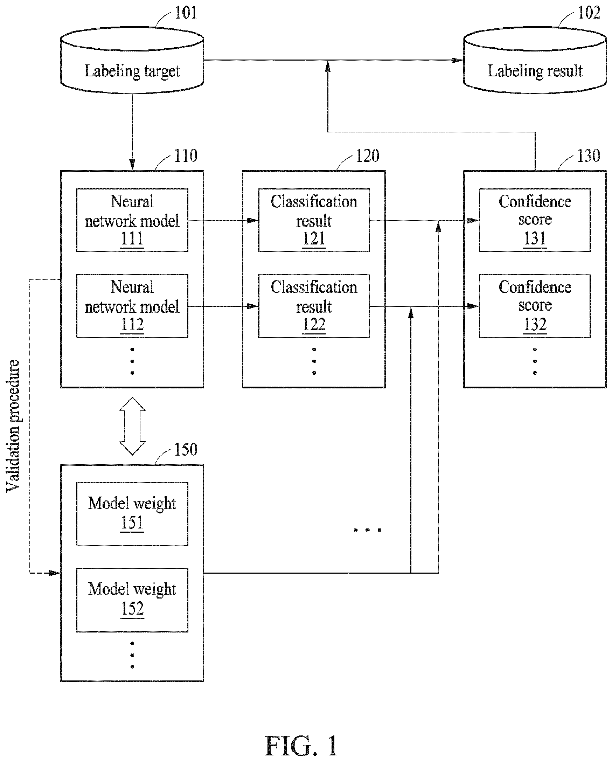

FIG. 1 illustrates an example labeling operation based on an ensemble model, according to one or more embodiments. An ensemble model 110 may include neural network models 111 and 112. Although two neural network models 111 and 112 are illustrated in FIG. 1, the ensemble model 110 may include m neural network models. Hereinafter, a labeling operation based on the two neural network models 111 and 112 is described. However, the same description applies equally to an ensemble model 110 with m neural network models. The neural network models 111 and 112 may each be a deep neural network (DNN), each including a respective plurality of layers.

A DNN may be a fully connected network (FCN), a convolutional neural network (CNN), a recurrent neural network (RNN), or any other type of neural network suitable for the ensemble-related techniques described herein. For example, at least a portion of the layers included in a neural network model may correspond to a CNN, and another portion of the layers may correspond to an FCN. The CNN may be referred to as convolutional layers, and the FCN may be referred to as fully connected layers.

A neural network serving as any of the neural network models 111 and 112 may be trained based on deep learning, and then perform inference for the purpose of the training, by mapping, input data to output data that are in a nonlinear relationship. Deep learning is a machine learning technique that may be used for solving any arbitrary problem, examples of which include recognizing images or speech from a big data set. Deep learning may be characterized as an optimization problem solving process of finding a point at which energy (or loss) is minimized while training a neural network using prepared training data.

Through supervised or unsupervised learning of deep learning, the structure of a neural network or a weight corresponding to a model may be obtained, and the input data and the output data may be mapped to each other through the weight. If the width and the depth of the neural network are sufficiently great, the neural network may have a capacity sufficient to implement a predetermined function. The neural network may achieve an optimized performance when learning a sufficiently large amount of training data through an appropriate training process.

The neural network may be expressed as being trained in advance, where "in advance" means before the neural network starts. That the neural network "starts" means that the neural network is ready for inference. "Starting" of the neural network may include loading the neural network into a memory or inputting input data for inference into the neural network after the neural network has been loaded into the memory.

The ensemble model 110 may perform a classification operation for a labeling target 101 based on an input of the labeling target 101, and may generate classification result data 120. The labeling target 101 may include labeling target inputs for which labels are not assigned (or are to be generated, even if already available). For example, the labeling target inputs may correspond to various pieces of multimedia data requiring classification. Hereinafter, an example of an image as a labeling target input is described. However, the labeling target input may be other types of data, such as voice.

The classification result data 120 may include classification results 121 and 122 respectively output by the neural network models 111 and 112. Each of the classification results 121 and 122 may include predicted values for each class of a multi-class (a multi-class is a set of multiple classes). The number of classes of the multi-class may be n, and the classification results 121 and 122 may include n predicted values, respectively (i.e., predictions for each class). The classification result data 120 may include predicted classes in the multi-class of m neural network models and may be an m*n classification result matrix.

Weight data 150 may be generated through a validation procedure for the ensemble model 110. The weight data 150 is to be distinguished from the weights of the neural network models 111 and 112 in the ensemble model 110 (i.e., the weights of respective nodes). Rather, the weight data 150 controls contributions of the individual neural network models 111 and 112 (also referred to herein as constituent models) to overall inference (e.g., categorizing or labeling) performed by the ensemble model 110 based on combined outputs of the constituent models. In other words, the weight data 150 may control the relative contributions of the constituent models' inferences to an overall inference of the ensemble model 110. A model weight in the weight data 150 may control the relative contribution of the corresponding constituent model according to different conditions, e.g., the type of data being categorized, etc.

More specifically, the weight data 150 may include weights for each of the m neural network models of the ensemble model 110, respectively. For m models in the ensemble model 110 there may be m respective model weights. Each of the model weights 151 and 152 may include n sub-weights (described below), where n is the number of classes in the multi-class. The weight data 150 may be expressed as an m*n weight matrix.

The weight data 150 may be determined by integrating model confidence data with consistency data. The model confidence data may have m model confidences of the m constituent neural network models, respectively. The model confidence data may be an m-dimension vector. The consistency data may m classification consistencies for the m constituent neural network models, respectively. The consistency data may correspond to a matrix of m*n dimension. As described below, the model confidence data and the consistency data may be integrated based on a multiplication operation. To summarize, the m constituent models may have different inference performance features (e.g., a combination of confidence and consistency) for each of the n classes (of the multi-class), and the weight data 150 may be, for example, an m*n weight matrix that maps an arbitrary model-class input (an identity of a constituent model and a class) to a corresponding weight of the identified constituent matrix.

Score data 130 may be determined by applying the weight data 150 to the classification result data 120. The score data 130 may be confidences for each class for labeling target inputs of the labeling target 101, respectively. Although two confidence scores 131 and 132 based on the respective classification results 121 and 122 of the two neural network models 111 and 112 are illustrated in FIG. 1, the score data 130 may include m confidence scores. The m confidence scores may correspond to m classification results, respectively, of the classification result data 120, respectively. Each of the confidence scores 131 and 132 may include n confidences for the n classes of the multi-class, respectively. The score data 130 may be expressed as an m*n score matrix.

A labeling result 102 based on, and for, the labeling target 101 may be determined based on the score data 130. The labeling result 102 is based on the labeling target data 101 in that the labeling target data 101 has been inferenced by the ensemble model 110, classification results of the inference have been weighted by the weight data 150 to produce the confidence score data 130 used to determining a labeling result 102. Individual score data (individual scores) of the score data 130 may be generated based on respective labeling target inputs of the labeling target 101. For example, first individual score data may be generated based on a first labeling target input and second individual score data may be generated based on a second labeling target input.

Although not shown in FIG. 1, the individual labeling target inputs may be sorted into two groups or types, based on their respective individual score data; a certain-label group for which label scores are deemed sufficiently certain that they may be used as a final result, and a review group for which label scores are deemed insufficiently certain and for which manual labeling (or other processing) might be performed to obtain sufficiently certain labels. That is to say, each individual labeling target input may be sorted into the certain-label group or the review group based on its corresponding individual score data. For example, when individual score data of an individual labeling target is absolutely and/or relatively high (e.g., compared to a threshold), the individual score data may be classified into certain-label group, and otherwise may be classified into the review group.

When an individual labeling target input is classified/sorted into the certain-label group, a label of the corresponding individual score data (the label associated with the score data) may be certainly (or finally) assigned to the individual labeling target input. When an individual labeling target input is classified/sorted into the review group, final labeling may be performed, for example by manually or computationally reviewing suitability of its inferenced label based on its label's individual score data. For example, such a review operation may be manually performed by a system administrator, another learning model, etc., or may be discarded. When a label is finally assigned to each labeling target input (whether by sufficiently certain score data or by manual review, for example), training pairs each including a labeling target input and a label may be stored as a labeling result 102. Although referred to as training pairs, such labeled data may have other uses besides training. For example, the training pairs may stand as useful inference/classification results of the labeling target 101. Thus, although the term "training pairs" or "training data" may be used herein to describe results of the ensemble model 110, such results are not required to be used as training data per se.

Through the training pairs of the labeling result 102, a new neural network model may be trained. The m neural network models of the ensemble model 110 may be pre-trained through other training data to perform the labeling operations described earlier. The training data used for training the ensemble model 110 may be referred to as primary training data. The primary (or ground-truth) training data may have clear training pairs having accurate labels. For example, the primary training data may be generated by a human. Accordingly, the size of the primary training data may be limited.

The training data based on the labeling result 102 may be referred to as secondary training data. Labels inferred by the ensemble model 110 may be automatically assigned to respective individual labeling target inputs in the certain-label group. The secondary training data may include training pairs from the certain-label group. Thus, most of the secondary training data may be automatically formed. Accordingly, the secondary training data may be larger than the primary training data. Where some deep learning requires by large-scale training data, the secondary training data may satisfy this requirement for the deep learning, and a neural network model with a desired performance may thus be trained with the secondary training data.

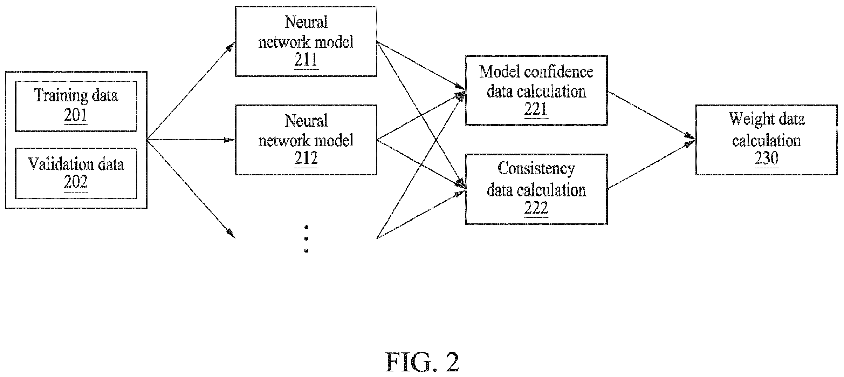

FIG. 2 illustrates an example process of deriving weight data, according to one or more embodiments. Neural network models 211 and 212 may be trained through training data 201, for example, primary training data. The neural network models 211 and 212 may constitute an ensemble model (the ensemble model may include m neural network models).

Weight data may be derived through a validation procedure using validation data 202. The training data 201 and the validation data 202 may have pre-derived labels. The training data 201 may be independent from the validation data 202 or the training data 201 may at least partially overlap with the validation data 202.

The validation data 202 may include a first validation data set used for model confidence data calculation (operation 221) and a second validation data set used for consistency data calculation (operation 222). First partial data of a validation result may be generated through a classification operation of the first validation data set and second partial data of the validation result may be generated through a classification operation of the second validation data set. In an example, the first validation data set may be independent from the second validation data set or the first validation data set may at least partially overlap with the second validation data set. At least a portion of the second validation data set may be generated through transformation of at least a portion of the first validation data set. For example, k sub data sets of the second validation data set may be generated through k times of transformations of the first validation data set. Transformation may include known augmentation algorithms for augmenting data sets.

The neural network models 211 and 212 (representative of m models) may generate first validation result data based on each validation input of the first validation data set. Through the first validation result data, model confidence data may be calculated. The model confidence data may be calculated based on Equations 1 to 3 shown below.

Equation 1

$$a_k = \frac{\exp(a_k)}{\sum_{i=1}^{m} \exp(a_i)}$$

In Equation 1, $a_k$ denotes a model confidence of a k-th neural network model. Variable i denotes a model index, and m denotes the number of neural network models of the corresponding ensemble model. Variable i may have a value ranging from 1 to m. Variable $a_k$ denotes a normalized value of a model confidence of the k-th neural network model among the m neural network models. The variable $a_k$ may be normalized through a normalization function (e.g., softmax).

Equation 2

$$a_i = \frac{1}{n} \sum_{c=1}^{n} Recall_c$$

In Equation 2, c denotes a class index and n denotes the number of classes. The model confidence of a constituent model may be an integrated value for all classes for that constituent model. An average classification performance of an i-th constituent neural network model for all classes may be determined through a;.

Equation 3

$$Recall_c = \frac{TP_c}{TP_c + FN_c}$$

In Equation 3, TP represents a true positive and FN represents a false negative. A classification performance of the i-th constituent neural network model for a c-th class may be determined through $Recall_c$.

The neural network models 211 and 212 may generate the second validation result data based on each validation input of the second validation data set. The consistency data may be calculated through the second validation result data. The consistency data may be calculated based on Equations 1 to 3.

Equation 4

$$q_{i,l} = \frac{\exp(q_{i,l})}{\sum_{c=1}^{n} \exp(q_{i,c})}$$

In Equation 4, $q_{i,l}$ denotes classification consistency for an l-th class of the i-th constituent neural network model. Variable i denotes a model index, and l (ell) and c together denote a class index. Variable/index i may have a value ranging from 1 to m. Variables l (ell) and c may have a value ranging from 1 to n. Variable $q_{i,l}$ may correspond to a normalized value of classification consistency for the l-th (ell-th) class among n classes of the i-th neural network model.

Equation 5

$$q_{i,c} = \frac{1}{k} \sum_{j=1}^{k} Recall_{i,j,c}$$

The second validation data set may include k sub data sets. In Equation 5, j denotes a test set index and k denotes the number of sub data sets. Variable $q_{i,c}$ may denote classification consistency for the c-th class of the i-th neural network model. Each sub data set may include various pieces of transformed data of each class, and secondary validation result data may be generated through the k sub data sets. $q_{i,c}$ may be determined through the secondary validation result data.

When the model confidence data and the consistency data are determined, the weight data may be determined by integrating the model confidence data and the consistency data. The integration to generate the weight data may be determined through Equation 6.

Equation 6

$$\mathbf{S} = \begin{bmatrix} q_{1,1} & \cdots & q_{1,n} \\ \vdots & \ddots & \vdots \\ q_{m,1} & \cdots & q_{m,n} \end{bmatrix} \odot \begin{bmatrix} a_1 \\ \vdots \\ a_m \end{bmatrix} \mathbf{1}^T$$

$$= \begin{bmatrix} q_{1,1} \times a_1 & \cdots & q_{1,n} \times a_1 \\ \vdots & \ddots & \vdots \\ q_{m,1} \times a_m & \cdots & q_{m,n} \times a_m \end{bmatrix} = \begin{bmatrix} s_{1,1} & \cdots & s_{1,n} \\ \vdots & \ddots & \vdots \\ s_{m,1} & \cdots & s_{m,n} \end{bmatrix}$$

According to Equation 6, an m*n weight matrix including elements from $s_{1,1}$ to $s_{m,n}$ may be determined based on an operation between an m*n consistency matrix including elements from qi,i to $q_{m,n}$ and an n*1 model confidence vector including elements from $a_1$ to $a_m$. The consistency matrix and the model confidence vector may correspond to the consistency data and the model confidence data, respectively. Index 1 corresponds to one vector of m*1. The operation between the consistency matrix and the model confidence vector may correspond to an element-wise multiplication. Variable m corresponds to the number of neural network models of an ensemble model and n corresponds to the number of classes (classifications that the ensemble model is trained to infer).

Equation 7

$$\mathbf{H} = \begin{bmatrix} s_{1,1} & \cdots & s_{1,n} \\ \vdots & \ddots & \vdots \\ s_{m,1} & \cdots & s_{m,n} \end{bmatrix} \odot \begin{bmatrix} p_{1,1} & \cdots & p_{1,n} \\ \vdots & \ddots & \vdots \\ p_{m,1} & \cdots & p_{m,n} \end{bmatrix} = \begin{bmatrix} h_{1,1} & \cdots & h_{1,n} \\ \vdots & \ddots & \vdots \\ h_{m,1} & \cdots & h_{m,n} \end{bmatrix}$$

According to Equation 7, as a labeling target input is input to the ensemble model, an m*n classification result matrix including elements from $p_{1,1}$ to $p_{m,n}$ may be determined. The classification result matrix may correspond to the classification result data. An m*n score matrix including elements from $h_{1,1}$ to $h_{m,n}$ may be determined based on an operation between the classification result matrix and the weight matrix. In effect, the weight matrix is applied to the classification result matrix to generate a new classification result matrix, i.e., the score matrix, which reflects the weights of the constituent models. The operation between the classification result matrix and the weight matrix may be an element-wise multiplication. The score matrix may correspond to score data.

The score data based on each individual labeling target input may be referred to as individual score data. The individual score data may be represented by an individual score matrix. The individual score data may have a representative score value. In an example, the representative score value may correspond to a maximum value calculated from the individual score matrix. In an example, the representative score value may be determined based on Equations 8 and 9 shown below.

Equation 8

$$\mathbf{g} = \begin{bmatrix} g_1 & \cdots & g_n \end{bmatrix}$$

Equation 9

$$g_c = \sum_{i=1}^{m} h_{i,c}$$

In Equation 8, g denotes an individual score vector. Variables $g_1$ to $g_n$ of Equation 8 and $g_c$ of Equation 9 denote elements of the individual score vector. Variable $h_{i,c}$ of Equation 9 denotes a confidence of the c-th class (of the n classes) of the i-th neural network model (of the m models). Variable m denotes the number of constituent neural network models of the ensemble model. Each element of the individual score vector may be determined by integrating elements of the individual score matrix of the corresponding class. For example, a sum of $h_{1,1}$ to $h_{m,1}$ of the individual score matrix (which is generated based on the first labeling target input) may correspond to element $g_1$ of the individual score vector. Element $g_1$ represents an integrated confidence of the constituent neural network models for the first class.

When an individual score vector is determined, a representative score value of the individual score vector may be determined based on Equation 10.

Equation 10

$$Data\_Score_d = max(\mathbf{g})$$

In Equation 10, $Data\_Score_d$ denotes a representative score value and g denotes an individual score vector. The maximum value of the individual score vector may be used as a representative score value of the corresponding labeling target input. The data score of an individual labeling target input may represent the best classification that the ensemble model inferenced for the individual labeling target. Representative score values may be obtained from all respective labeling target inputs, and labeling target inputs may be aligned (or sorted) by an order of the representative score values. Labeling target inputs having low representative score values (e.g., below a threshold) may be sorted into the review group.

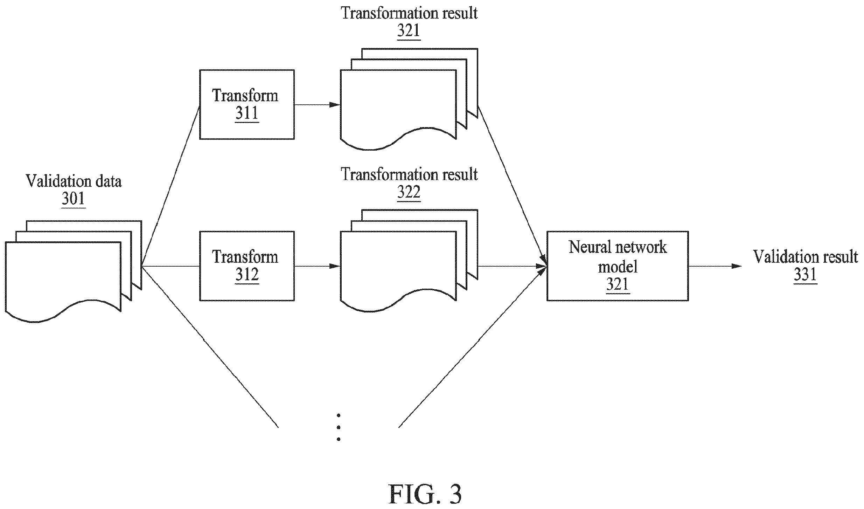

FIG. 3 illustrates an example process of deriving consistency data, according to one or more embodiments. Referring to FIG. 3, transformation results 321 and 322 may be generated through transformation operations 311 and 312 for validation data 301. Although two transformation results 321 and 322 based on two transformation operations 311 and 312 are illustrated in FIG. 3, k transformation results including the transformation results 321 and 322 may be generated through k transformation operations including the transformation operations 311 and 312. The validation data may include a first validation data set used for model confidence data calculation and a second validation data set used for consistency data calculation. The k transformation results may constitute the second validation data set. The k transformation results may be referred to as sub data sets of the second validation data set.

A neural network model 321 may output a validation result 331 based on inputs of the transformation results 321 and 322. The neural network model 321 may be one of the m neural network models of the ensemble model. The m neural network models may generate k sub validation results based on k sub data sets, respectively. The validation result 331 may be derived through a secondary validation procedure using the secondary validation data set. The classification consistency for each class of the neural network model may be derived by applying the validation result 331 to Equations 4 and 5.

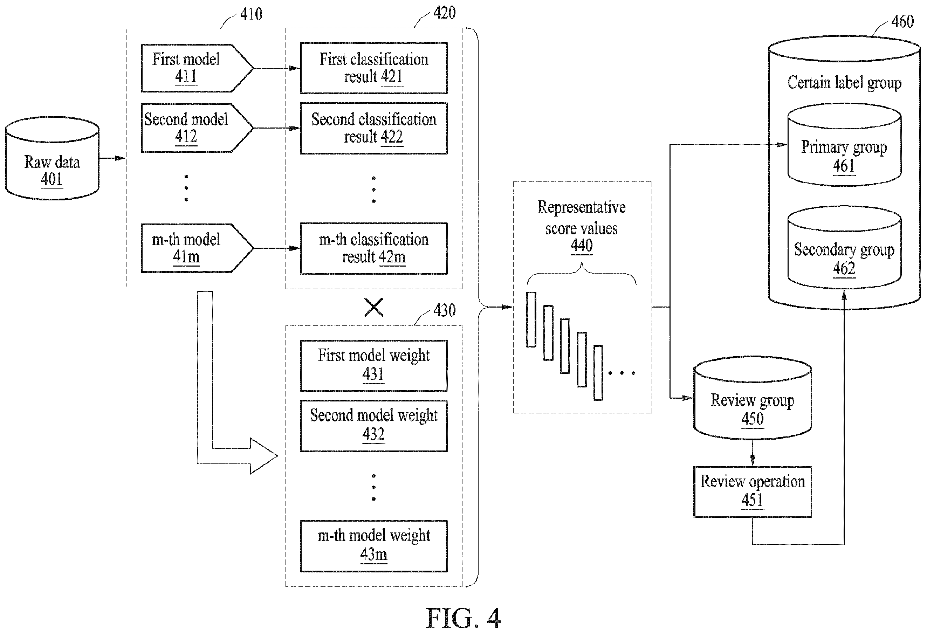

FIG. 4 illustrates a detailed example labeling process, according to one or more embodiment. Referring to FIG. 4, an ensemble model 410 may generate classification result data 420 based on raw data 401. The ensemble model 410 may include models 411, 412, and 41m, and the models 411, 412, and 41m may generate respective classification results 421, 422, and 42m of the result data 420, respectively. Weight data 430 may have been previously determined through a validation procedure for the ensemble model 410, as described above. The weight data 430 may include model weights 431, 432, and 43m. Representative score values 440 may be determined by integrating the classification result data 420 and the weight data 430.

The representative score values 440 may include a representative score value for each input item of the raw data 401. The representative score values 440 may be sorted or ordered based on their magnitudes. Among the representative score values 440, a portion of the raw data 401 having a high order may be classified into a certain-label group 460 and a portion of the raw data 401 having a low order may be classified into a review group 450. Based on a review operation 451 for the review group 450, all of the raw data 401 may eventually belong to the certain-label group 460. The certain-label group 460 may include a primary group 461 classified into the certain-label group 460 without the review operation 451 and a secondary group 462 classified into the certain-label group 460 through the review operation 451. The certain-label group 460 may form a large-scale set of training data.

The descriptions provided with reference to FIGS. 1 to 3 and FIGS. 5 to 8 may apply to the examples of FIG. 4.

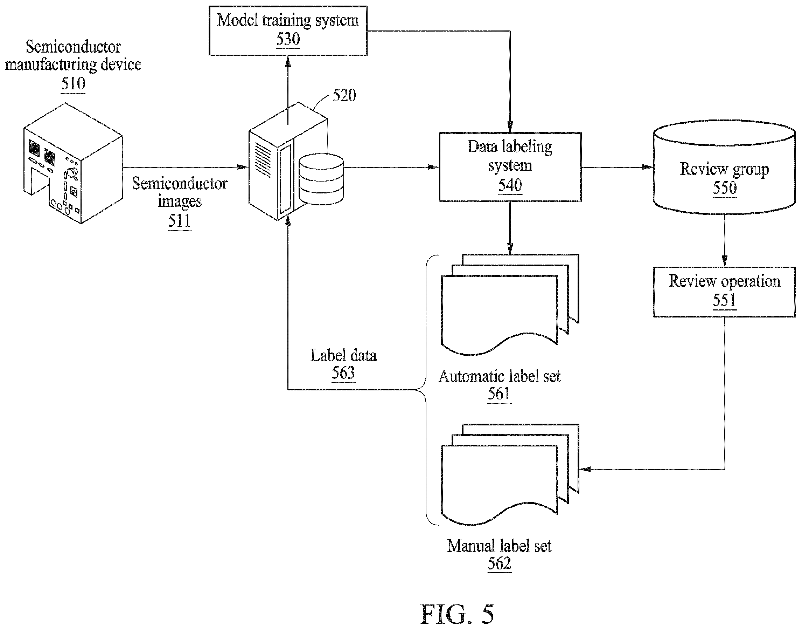

FIG. 5 illustrates an example of applying a labeling operation to a semiconductor manufacturing process, according to one more embodiments. While a semiconductor manufacturing process of a semiconductor manufacturing device 510 is performed, semiconductor images 511 of semiconductors (e.g., wafers) produced by the semiconductor process may be captured. For example, the semiconductor images 511 may images of semiconductors in-progress during the semiconductor manufacturing process or of semiconductors that are a final product of the semiconductor manufacturing process. The semiconductor images 511 may be stored in a database 520.

Primary training data may be determined by using a portion of the semiconductor images 511 of the database 520. The primary training data may be configured by clear training pairs having accurate (or ground truth) labels. For example, the primary training data may be constituted by a human. Accordingly, the size of the primary training data may be limited. A model training system 530 may train an ensemble model using the primary training data. Ensemble data may be used by a data labeling system 540.

Secondary training data may be constituted by using another portion of the semiconductor images 511 from the database 520. The other portion of the semiconductor images 511 may correspond to raw data for generating the secondary training data. The data labeling system 540 (including an ensemble model) may assign a label to the raw data. The data labeling system 540 may classify raw data having a representative score value with a high order into an automatic label set 561 (i.e., a clear-label set) through a labeling operation and classifies raw data having a representative score value with a low order into a review group 550. Based on a review operation 551 for the raw data of the review group 550, a manual label set 562 may be determined. The automatic label set 561 and the manual label set 562 may be provided to the database 520 as label data 563. Large-scale training data may be constituted based on the label data 563.

The descriptions provided with reference to FIGS. 1 to 4 and FIGS. 6 to 8 may apply to the examples of FIG. 5.

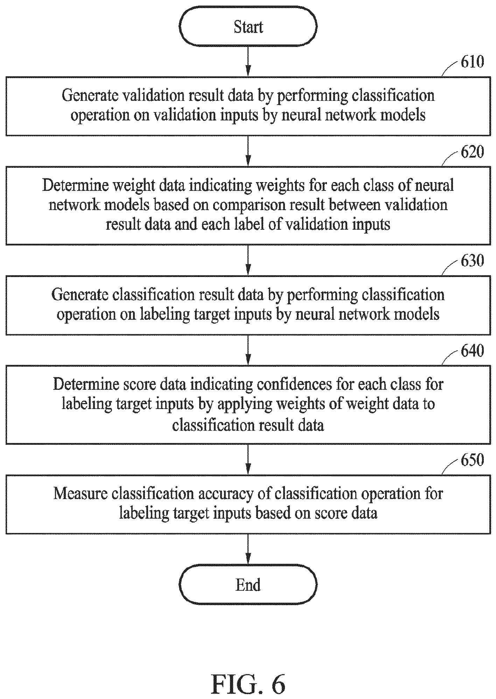

FIG. 6 illustrates an example labeling method, according to one or more embodiments. In operation 610, a labeling device may generate validation result data by performing a classification operation on validation inputs by neural network models. In operation 620, the labeling method may determine weight data indicating weights for each class of the neural network models, and may do so based on a comparison result between the validation result data and each label of the validation inputs. In operation 630, the labeling method may generate classification result data by performing a classification operation on labeling target inputs by the neural network models. In operation 640, the labeling method may determine score data representing confidences for each class for the labeling target inputs by applying weights of the weight data to the classification result data. In operation 650, the labeling method may measure classification accuracy of the classification operation for the labeling target inputs, based on the score data.

Operation 610 may include generating first partial data of the validation result data by performing a first classification operation on the validation inputs by the neural network models, an operation of generating additional validation inputs by transforming the validation inputs, and an operation of generating second partial data of the validation result data by performing a second classification operation on the additional validation inputs by the neural network models.

Operation 620 may include determining model confidence data indicating model confidence of the neural network models and consistency data indicating classification consistency for each class of the neural network models, based on a comparison result between each label of the validation inputs and the validation result data, and an operation of determining the weight data by integrating the model confidence data and the consistency data.

Operation 650 may include determining representative score values based on the labeling target inputs based on the score data, and an operation of classifying each of the labeling target inputs into a certain label group or a review group based on the representative score values.

The score data may include individual score data of each of the respective individual labeling target inputs, and the determining the representative score values may include determining a maximum value of each piece of individual score data of the labeling target inputs of the score data to be the representative score value of each of the labeling target inputs.

The weight data may correspond to an m*n weight matrix, where m is the number of neural network models and n is the number of classes of the validation inputs.

Operation 630 may include generating a first classification result matrix based on a first labeling target input of the labeling target inputs, and operation 640 may include determining an m*n first individual score matrix by applying the weight matrix to the first classification result matrix.

Operation 650 may include determining a first representative score value for the first labeling target input from the first individual score matrix, and classifying the first labeling target input into a certain-label group or a review group based on the first representative score value.

The determining the first representative score value may include determining a 1*n first individual score vector by integrating elements of the first individual score matrix for each class, and by determining a maximum value of the elements of the first individual score vector to be the first representative score value.

The validation inputs and the labeling target inputs may correspond to semiconductor images based on a semiconductor manufacturing process. The classes of the neural network models may correspond to types of manufacturing defects based on the semiconductor manufacturing process. The methods, operations, and techniques described above, however, may be applied to any general inference problem and is not limited to semiconductor evaluation.

In addition, the descriptions provided with reference to FIGS. 1 to 5 and FIGS. 7 and 8 may apply to the examples of FIG. 6.

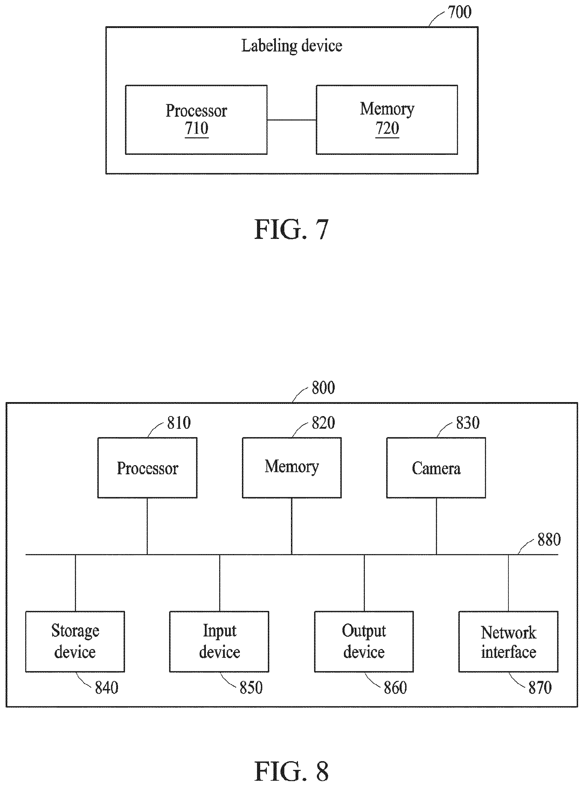

FIG. 7 illustrates an example configuration of a labeling apparatus, according to one or more embodiments. A labeling device 700 may include a processor 710 and a memory 720. The memory 720 may be connected to the processor 710 and store instructions executable by the processor 710, data to be computed by the processor 710, or data processed by the processor 710. The memory 720 may include a non-transitory computer-readable medium, for example, highspeed random-access memory (RAM), and/or a nonvolatile computer-readable storage medium (e.g., one or more disk storage devices, flash memory devices, or other nonvolatile solid state memory devices).

The processor 710 may execute the instructions to perform the operations described above with reference to FIGS. 1 to 6 and 8. For example, the processor 710 may be configured to generate validation result data by performing a classification operation on validation inputs by neural network models, determine weight data indicating weights for each class of the neural network models, based on a comparison result between the validation result data and each label of the validation inputs, generate classification result data by performing a classification operation on labeling target inputs by the neural network models, determine score data representing confidences for each class for the labeling target inputs by applying weights of the weight data to the classification result data, and measure classification accuracy of the classification operation for the labeling target inputs, based on the score data.

In addition, the descriptions provided with reference to FIGS. 1 to 6 and FIG. 8 may apply to the examples of FIG. 7.

FIG. 8 illustrates an example configuration of an electronic device, according to one or more embodiments. The electronic device 800 may include a processor 810, a memory 820, a camera 830, a storage device 840, an input device 850, an output device 860, and a network interface 870. The processor 810, the memory 820, the camera 830, the storage device 840, the input device 850, the output device 860, and the network interface 870 may communicate with each other via a communication bus 880. For example, the electronic device 800 may be implemented as at least a portion of, for example, a mobile device such as a mobile phone, a smartphone, a personal digital assistant (PDA), a netbook, a tablet computer, a laptop computer, and the like, a wearable device such as a smart watch, a smart band, smart glasses, and the like, a home appliance such as a television (TV), a smart TV, a refrigerator, and the like, a security device such as a door lock and the like, and a vehicle such as an autonomous vehicle, a smart vehicle, and the like. The electronic device 800 may include, structurally and/or functionally, the labeling device 700 of FIG. 7.

The processor 810 executes functions and instructions for execution in the electronic device 800. For example, the processor 810 may process instructions stored in the memory 820 or the storage device 840. The processor 810 may perform one or more of the methods and operations described above with reference to FIGS. 1 to 11. The memory 820 may include a computer-readable storage medium or a computer-readable storage device. The memory 820 may store instructions to be executed by the processor 810 and may store related information while software and/or an application is executed by the electronic device 800.

The camera 830 may capture a photo and/or a video. The storage device 840 includes a computer-readable storage medium or computer-readable storage device. The storage device 840 may store more information than the memory 820 for a long time. For example, the storage device 840 may include a magnetic hard disk, an optical disc, a flash memory, a floppy disk, or other types of non-volatile memory known in the art.

The input device 850 may receive an input from the user in traditional input manners through a keyboard and a mouse and in new input manners such as a touch input, a voice input, and an image input. For example, the input device 850 may include a keyboard, a mouse, a touch screen, a microphone, or any other device that detects the input from the user and transmits the detected input to the electronic device 800. The output device 860 may provide an output of the electronic device 800 to the user through a visual, auditory, or haptic channel. The output device 860 may include, for example, a display, a touch screen, a speaker, a vibration generator, or any other device that provides the output to the user. The network interface 870 may communicate with an external device through a wired or wireless network.

The computing apparatuses, the vehicles, the electronic devices, the processors, the memories, the image sensors/cameras, the displays, the information output system and hardware, the storage devices, and other apparatuses, devices, units, modules, and components described herein with respect to FIGS. 1-8 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-8 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims and their equivalents, and all variations within the scope of the claims and their equivalents are to be construed as being included in the disclosure.

**Claims**

1. A labeling method comprising:

   determining inference performance features of respective neural network models comprised in an ensemble model, wherein the inference performance features correspond to performance of the neural network models with respect to inferring classes of the ensemble model;
   based on the inference performance features, determining weight data indicating weights for each of the classes for each of the neural network models, wherein the weight data is representative for contributions of the respective neural network models to overall inference of the ensemble model;
   generating classification result data by performing a classification inference operation on labeling target inputs by the neural network models;
   determining score data representing confidences for each of the classes for the labeling target inputs by applying weights of the weight data to the classification result data; and
   measuring classification accuracy of the classification operation for the labeling target inputs based on the score data.

2. The labeling method of claim 1, further comprising:

   generating validation result data by performing a classification operation on validation inputs by the neural network models;
   generating first partial data of the validation result data by performing a first classification operation on the validation inputs by the neural network models;
   generating additional validation inputs by transforming the validation inputs; and
   generating second partial data of the validation result data by performing a second classification operation on the additional validation inputs by the neural network models.

3. The labeling method of claim 1 or 2, wherein the determining of the weight data comprises:

   determining model confidence data indicating model confidence of the neural network models and consistency data indicating classification consistency for each class of the neural network models, based on a comparison result between labels of the validation inputs and the validation result data; and
   determining the weight data by integrating the model confidence data and the consistency data.

4. The labeling method of any of the previous claims, wherein the measuring of the classification accuracy comprises:

   determining representative score values based on the labeling target inputs based on the score data; and
   classifying each of the labeling target inputs into a first group or a second group based on the representative score values.

5. The labeling method of claim 4, wherein the score data comprises individual score data of each of the labeling target inputs, and

the determining of the representative score values comprises determining a maximum value of each piece of individual score data of the labeling target inputs of the score data to be the representative score value of each of the labeling target inputs.

6. The labeling method of any of the previous claims, wherein the weight data corresponds to an m*n weight matrix,

where m is the number of the neural network models, and
where n is the number of classes.

7. The labeling method of claim 6, wherein the generating of the classification result data comprises generating a first classification result matrix based on a first labeling target input of the labeling target inputs, and
the determining of the score data comprises determining an m*n first individual score matrix by applying the weight matrix to the first classification result matrix.

8. The labeling method of claim 7, wherein the measuring of the classification accuracy comprises:

determining a first representative score value for the first labeling target input from the first individual score matrix; and
classifying the first labeling target input into a certain label group or a review group based on the first representative score value,
wherein preferably the determining of the first representative score value comprises:

determining a 1 *n first individual score vector by integrating elements of the first individual score matrix for each class; and
determining a maximum value of the elements of the first individual score vector to be the first representative score value.

9. The labeling method of any of the previous claims, wherein the validation inputs and the labeling target inputs correspond to semiconductor images based on a semiconductor manufacturing process, and
the classes of the neural network models correspond to types of manufacturing defects based on the semiconductor manufacturing process.

10. A labeling device comprising:

one or more processors; and
a memory storing instructions configured to, when executed by the one or more processors, cause the one or more processors to:

generate validation result data by performing a classification operation on validation inputs by neural network models,
determine weight data indicating weights for each class of the neural network models, based on a comparison result between the validation result data and each label of the validation inputs, wherein the weight data is representative for contributions of the respective neural network models to overall inference;
generate classification result data by performing a classification operation on labeling target inputs by the neural network models;
determine score data representing confidences for each class for the labeling target inputs by applying weights of the weight data to the classification result data, and
measure classification accuracy of the classification operation for the labeling target inputs, based on the score data.

11. The labeling device of claim 10, wherein the instructions are further configured to cause the one or more processors to:

generate first partial data of the validation result data by performing a first classification operation on the validation inputs by the neural network models,

generate additional validation inputs by transforming the validation inputs, and
generate second partial data of the validation result data by performing a second classification operation on the additional validation inputs by the neural network models.

12. The labeling device of claim 10 or 11, wherein, to determine the weight data, the instructions are further configured to cause the one or more processors to:

determine model confidence data indicating model confidence of the neural network models and consistency data indicating classification consistency for each class of the neural network models, based on a comparison result between each label of the validation inputs and the validation result data, and
determine the weight data by integrating the model confidence data and the consistency data.

13. The labeling device of any of claims 10 - 12, wherein, to measure the classification accuracy, the instructions are further configured to cause the one or more processors to:

determine representative score values based on the labeling target inputs based on the score data, and
classify each of the labeling target inputs into a certain label group or a review group based on the representative score values,
wherein preferably the score data comprises individual score data of each of the labeling target inputs, and to determine the representative score values, the instructions are further configured to cause the one or more processors to determine a maximum value of each piece of individual score data of the labeling target inputs of the score data to be the representative score value of each of the labeling target inputs.

14. The labeling device of any of claims 10 - 13, wherein the instructions are further configured to cause the one or more processors to:

generate the classification result data, generate a first classification result matrix based on a first labeling target input of the labeling target inputs, and
to determine the score data, determine an m*n first individual score matrix by applying the weight matrix to the first classification result matrix,
wherein, preferably, to measure the classification accuracy, the instructions are further configured to cause the one or more processors to:

determine a first representative score value for the first labeling target input from the first individual score matrix, and
classify the first labeling target input into a certain label group or a review group based on the first representative score value.

15. The labeling device of any of claims 10 - 14, wherein the validation inputs and the labeling target inputs correspond to semiconductor images based on a semiconductor manufacturing process, and
the classes of the neural network models correspond to types of manufacturing defects based on the semiconductor manufacturing process.

FIG. 1

FIG. 2

Transformation result
321

Transform
311

Validation data
301

Transformation result
322

Transform
312

Neural network
model
321

Validation result
331

FIG. 3

FIG. 4

Semiconductor manufacturing device
510

Semiconductor images
511

520

Model training system
530

Data labeling system
540

Review group
550

Review operation
551

Label data
563

Automatic label set
561

Manual label set
562

FIG. 5

EP 4 365 786 A1

```
                    ┌─────────────────┐
                    │      Start       │
                    └─────────────────┘
                              │                              ╱ 610
   ┌──────────────────────────▼───────────────────────────┐
   │   Generate validation result data by performing       │
   │   classification operation on validation inputs by     │
   │   neural network models                                │
   └──────────────────────────┬───────────────────────────┘
                              │                              ╱ 620
   ┌──────────────────────────▼───────────────────────────┐
   │  Determine weight data indicating weights for each     │
   │  class of neural network models based on comparison    │
   │  result between validation result data and each label  │
   │  of validation inputs                                  │
   └──────────────────────────┬───────────────────────────┘
                              │                              ╱ 630
   ┌──────────────────────────▼───────────────────────────┐
   │  Generate classification result data by performing     │
   │  classification operation on labeling target inputs     │
   │  by neural network models                              │
   └──────────────────────────┬───────────────────────────┘
                              │                              ╱ 640
   ┌──────────────────────────▼───────────────────────────┐
   │  Determine score data indicating confidences for each  │
   │  class for labeling target inputs by applying weights   │
   │  of weight data to classification result data           │
   └──────────────────────────┬───────────────────────────┘
                              │                              ╱ 650
   ┌──────────────────────────▼───────────────────────────┐
   │  Measure classification accuracy of classification     │
   │  operation for labeling target inputs based on score   │
   │  data                                                  │
   └──────────────────────────┬───────────────────────────┘
                              │
                    ┌─────────▼───────┐
                    │       End        │
                    └─────────────────┘
```

# FIG. 6

700

Labeling device

Processor
710

Memory
720

FIG. 7

800

810

820

830

Processor

Memory

Camera

880

Storage
device

Input
device

Output
device

Network
interface

840

850

860

870

FIG. 8

Europäisches
Patentamt

European
Patent Office

Office européen
des brevets

# EUROPEAN SEARCH REPORT

**Application Number**

EP 23 17 5128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EETI LAXMI NARAYANA ET AL: "Two hidden layer neural network-based rotation forest ensemble for hyperspectral image classification", GEOCARTO INTERNATIONAL, vol. 36, no. 16, 21 October 2019 (2019-10-21), pages 1820-1837, XP093137728, ISSN: 1010-6049, DOI: 10.1080/10106049.2019.1678680 * abstract * * page 1822 - page 1836 * ----- | 1-15 | INV. G06N20/20 G06N3/02 |
| A | CHENHUI ZHANG ET AL: "SCR: Training Graph Neural Networks with Consistency Regularization", ARXIV.ORG, CORNELL UNIVERSITY LIBRARY, 201 OLIN LIBRARY CORNELL UNIVERSITY ITHACA, NY 14853, 13 June 2022 (2022-06-13), XP091244691, * the whole document * ----- | 1-15 | |
| | | | **TECHNICAL FIELDS SEARCHED (IPC)** |
| | | | G06N |

The present search report has been drawn up for all claims

| Place of search | Date of completion of the search | Examiner |
|---|---|---|
| The Hague | 5 March 2024 | Tsakonas, Athanasios |